# EUROPEAN PATENT APPLICATION

(11) **EP 4 495 391 A2**
(43) Date of publication of application: **22.01.2025**
(21) Application number: 24189560.6
(22) Date of filing: 18.07.2024
(51) Int. Cl.: F01D 11/20, F01D 15/10

(54) **ACTIVE TURBINE ENGINE TIP CLEARANCE CONTROL UTILIZING ELECTRIC MACHINE**

(30) Priority: 18.07.2023 US 202318223226
(71) Applicant: RTX Corporation, Farmington, CT 06032 (US)
(72) Inventor: PHILBRICK, Graham R., Farmington, 06032 (US); COLLOPY, Gary, Farmington, 06032 (US); VIRTUE, JR., John P., Farmington, 06032 (US)
(74) Representative: Dehns

(57) **Abstract**

A method is provided for a hybrid electric propulsion system (12) that includes a gas turbine engine (14) and an electric motor (16) configured to assist the gas turbine engine (14) by rotating a first shaft (22, 24) of the gas turbine engine (14). The method includes receiving a throttle command, and determining, based on an amount of electric power available to the electric motor (16), a power allocation between the gas turbine engine (14) and the electric motor (16) for an acceleration period during which a rotational speed of the first shaft (22, 24) is accelerated to implement the throttle command. The method also includes determining a target clearance between a tip (62T) of a rotor blade (62) and a case structure (64) for the acceleration period and, during the acceleration period, implementing the power allocation and operating an active clearance control system to establish the target clearance. A system for an aircraft and a method for a hybrid electric propulsion system (12) are also disclosed.

## Description

### BACKGROUND

This application relates to hybrid electric propulsion (HEP) systems, and more particularly to utilization of an active clearance control (ACC) system in conjunction with a HEP system.

Gas turbine engines include a compressor that compresses air, a combustor that ignites the compressed air and a turbine across which the compressed air is expanded. The expansion of the combustion products drives the turbine to rotate, which in turn drives rotation of the compressor.

In order to increase efficiency, it is desirable to keep a clearance between the tips of the rotor blades (e.g., in the compressor or turbine) and a surrounding case structure (e.g., a blade outer air seal) sufficiently small, which ensures that a minimum amount of air passes between the tips and the case structure, and thereby improves efficiency.

Rotor stages (including blades, disks, and cases) are known to radially expand due to centrifugal force and thermal expansion (e.g., due to engine operating temperatures). Active clearance control (ACC) systems have been developed to selectively direct cooling fluid at the case structure to more closely control the clearance between blade tips and clearance structure. However, when a gas turbine engine accelerates rapidly, rotor stages typically expand more quickly than their surrounding case structure, which creates a limiting condition unable to overcome without slowing the acceleration time.

### SUMMARY

A method for a HEP system according to an example embodiment of the present disclosure includes receiving a throttle command for the HEP system. The HEP system includes a gas turbine engine and an electric motor configured to assist the gas turbine engine by rotating a first shaft of the gas turbine engine. The method also includes determining, based on an amount of electric power available to the electric motor, a power allocation between the gas turbine engine and the electric motor for an acceleration period during which a rotational speed of the first shaft of the gas turbine is accelerated to implement the throttle command. The first shaft is part of a low pressure spool of the gas turbine engine or a high pressure spool of the gas turbine engine. The method also includes determining a target clearance between a tip of a rotor blade and a case structure for the acceleration period, and, during the acceleration period, implementing the power allocation and operating an active clearance control (ACC) system to establish the target clearance.

In a further embodiment of the foregoing embodiment, for a particular throttle command, as the amount of electric power available increases, the target clearance decreases.

In a further embodiment of any of the foregoing embodiments, the method includes determining the amount of electric power available to the electric motor based on a charge level of a battery configured to power the electric motor.

In a further embodiment of any of the foregoing embodiments, the electric motor is a first motor-generator and the HEP system includes a second motor-generator configured to drive rotation of a second shaft. The method also includes determining the amount of electric power available to the first motor-generator based on an amount of power available from the second motor-generator due to excess capacity of the second motor-generator.

In a further embodiment of any of the foregoing embodiments, the method also includes determining the amount of electric power available to the electric motor based on a charge level of a battery configured to power the first motor-generator or the second motor-generator.

In a further embodiment of any of the foregoing embodiments, the rotor blade is a blade of a high pressure turbine, and the first shaft is part of the high pressure spool or the low pressure spool.

In a further embodiment of any of the foregoing embodiments, the method includes implementing a first acceleration rate for the first shaft during the acceleration period for a first amount of the available electric power, and implementing a second acceleration rate for the first shaft during the acceleration period for a second amount of the available electric power. The first amount of the available electric power is greater than the second amount of the available electric power, and the first acceleration rate is less than the second acceleration rate.

In a further embodiment of any of the foregoing embodiments, the rotor blade is a blade of a low pressure turbine of the gas turbine engine.

In a further embodiment of any of the foregoing embodiments, the first shaft is part of the low pressure spool.

A system for an aircraft according to an example embodiment of the present disclosure includes an ACC system configured to control a clearance between a tip of a rotating blade and a case structure by controlling thermal growth of the case structure, a HEP system that includes a gas turbine engine and an electric motor configured to assist the gas turbine engine by rotating a first shaft of the gas turbine engine, and a controller. The controller is configured to receive a throttle command; determine, based on an amount of electric power available to the electric motor, a power allocation between the gas turbine engine and the electric motor for an acceleration period during which a rotational speed of the first shaft of the gas turbine is accelerated to implement the throttle command. The first shaft is part of a low pressure spool of the gas turbine engine or a high pressure spool of the gas turbine engine. The controller is also configured to determine a target clearance between a tip of a rotor blade and a case structure for the acceleration period; and, during the acceleration period, implement the power allocation and operate the ACC system to utilize the target clearance.

In a further embodiment of the foregoing embodiment, the controller is configured to, for a particular throttle command, as the amount of electric power available increases, decrease the target clearance.

In a further embodiment of any of the foregoing embodiments, the system includes one or more batteries configured to power the electric motor. The controller is configured to determine the amount of electric power available to the electric motor based on a charge level of the one or more batteries.

In a further embodiment of any of the foregoing embodiments, the electric motor is a first motor-generator, and the HEP system includes a second motor-generator configured to drive rotation of the second shaft. The controller is configured to determine the amount of electric power available to the first motor-generator based on an amount of power available from the second motor-generator due to excess capacity of the second motor-generator.

In a further embodiment of any of the foregoing embodiments, the controller is further configured to determine the amount of electric power available to the electric motor based on a charge level of a battery configured to power the first motor-generator or the second motor-generator.

In a further embodiment of any of the foregoing embodiments, the rotor blade is a blade of a high pressure turbine. The first shaft is part of the high pressure spool or the low pressure spool.

In a further embodiment of any of the foregoing embodiments, the controller is configured to implement a first acceleration rate for the first shaft, during the acceleration period for a first amount of the available electric power; and implement a second acceleration rate for the first shaft during the acceleration period for a second amount of the available electric power. The first amount of available electric power is greater than the second amount of electric power, and the first acceleration rate is less than the second acceleration rate.

In a further embodiment of any of the foregoing embodiments, the rotor blade is a blade of a low pressure turbine of the gas turbine engine.

In a further embodiment of any of the foregoing embodiments, the first shaft is part of the low pressure spool.

A method for a HEP system, according to an example embodiment of the present disclosure includes receiving a throttle command for the HEP system. The system includes a gas turbine engine and an electric motor configured to assist the gas turbine engine by rotating a first shaft of the gas turbine engine. The method also includes, based on the throttle command and an amount of electric power available to the electric motor, determining a target clearance between a tip of a rotor blade and a case structure; and implementing the power allocation and operating an active clearance control (ACC) system to establish the target clearance.

In a further embodiment of the foregoing embodiment, the electric motor is a first motor-generator, the HEP system includes a second motor-generator configured to drive rotation of a second shaft, and the method includes determining the amount of electric power available to the first motor-generator based on an amount of power available from the second motor-generator due to excess capacity of the second motor-generator.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 is a schematic view of an example HEP system with an associated ACC system.
Figure 2 illustrates an example implementation of the ACC system of Figure 1.
Figure 3 is a flowchart that schematically illustrates an example method for operating the ACC of Figure 1 based on an amount of available electric power.
Figure 4 is a graph that schematically illustrates clearance gap and throttle conditions over time for various battery charge levels.
Figure 5 is a graph that schematically illustrates how power level varies based on an ACC system running clearance target.

### DETAILED DESCRIPTION

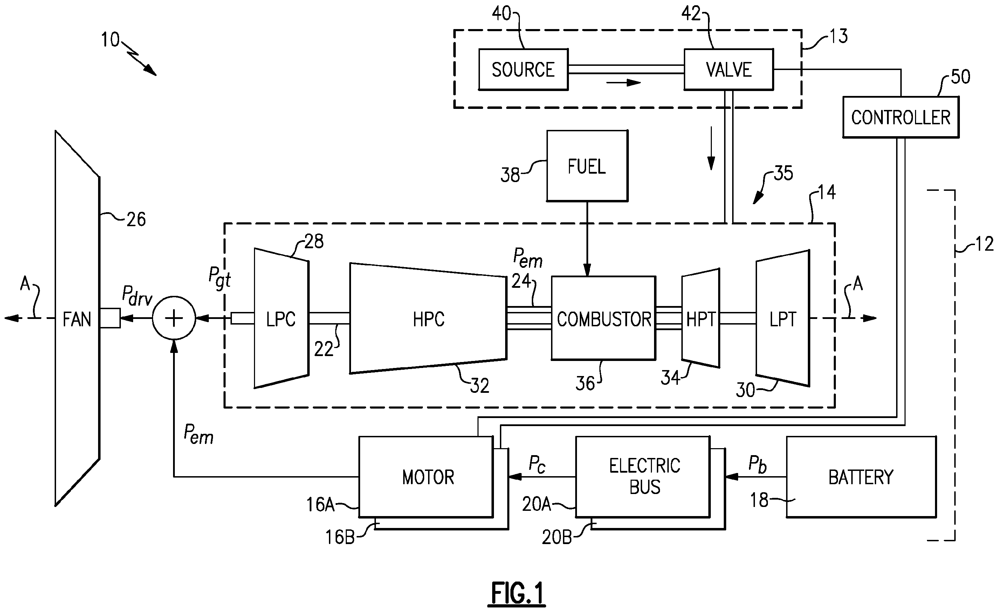

Figure 1 is a schematic view of a system 10 for an aircraft that includes an example HEP system 12 and an example ACC system 13. The HEP system 12 includes a gas turbine engine 14, which provides gas turbine power *P_{gt}* that is combustion-based, and two electric motors 16A-B that provide electric power *Pₑₘ*. The gas turbine engine 14 and electric motors 16A-B cooperate according to a power allocation to provide a combined power *P_{drv}.* Although two electric motors 16A-B are shown, it is understood this is a non-limiting example, and that greater or fewer electric motors 16 may be utilized in some configurations. In the discussion below, when reference numeral 16 is used on its own it may refer to a single electric motor providing *Pₑₘ*, or may be one of the two (or more) electric motors 16A-B.

The power allocation between the gas turbine engine 14 and an electric motor 16 may rely 100% on the combustion-based power *P_{gt},* 100% on the electric power *Pₑₘ*, or on some combination of the two. In one example, for each allocation during flight, the gas turbine power *P_{gt}* is non-zero.

The HEP system 12 includes one or more batteries 18 (e.g., lithium-ion batteries) that provide battery chemical power *P_{b}*. In the non-limiting example of Figure 1, electric busses 20A-B receive the power *P_{b}* and output electric power *P_{c}* to the motors 16A-B (e.g., bus 20A outputting electric power to motor 16A, and bus 20B outputting electric power to motor 16B). Other possible configuration could include a single electric bus outputting power to two or more motors, or two electric buses powering one or more motors.

The gas turbine engine 14 includes a shaft 22 that is part of a low speed spool that generally interconnects a fan 26, a first (or low) pressure compressor 28, and a first (or low) pressure turbine 30. The gas turbine engine 14 also includes a shaft 24 that is part of a high speed spool that interconnects a second (or high) pressure compressor 32 and a second (or high) pressure turbine 34. In the illustrative example, both of the shafts 22, 24 rotate about a central longitudinal axis A. However, this is not intended to be so limiting, and in alternative embodiments, two or more shafts coupling components of the high speed spool and the low speed spool (e.g., shafts 22, 24) may rotate about different axes. Below, the shaft 22 will be referred to as the low speed shaft, and the shaft 24 will be referred to as the high speed shaft. Motor 16A is configured to drive rotation of the low speed shaft 22, and motor 16B is configured to drive rotation of the high speed shaft 24. As will be discussed below in greater detail, the high speed shaft 24 may also provide electric power *Pₑₘ.*

A combustor 36 is arranged between the high pressure compressor 32 and the high pressure turbine 34. A core airflow is compressed by the low pressure compressor 28 then the high pressure compressor 32, is mixed and burned with fuel 38 in the combustor 36, and is then expanded over the high pressure turbine 34 and low pressure turbine 30. The turbines 30, 34 rotationally drive the respective low speed shaft 22 and high speed shaft 24 in response to the expansion. The low pressure turbine 30 and high pressure turbine 34 collectively represent a turbine section 35 of the gas turbine engine 14. The fan section 22 drives air along a bypass flow path in a bypass duct (not shown), and also drives air along a core flow path for compression and communication into the combustor 36 then expansion through the turbine section 35.

In one example, one or both of the electric motors 16 are motor-generators capable of operating as a motor when being powered by the battery 18 and are capable of operating as generators when driven by the low pressure shaft 22 or high pressure shaft 24.

It is understood that the parallel hybrid electric architecture depicted in Figure 1 is a non-limiting example, and that other architectures could be used, such as a series-hybrid propulsion architecture.

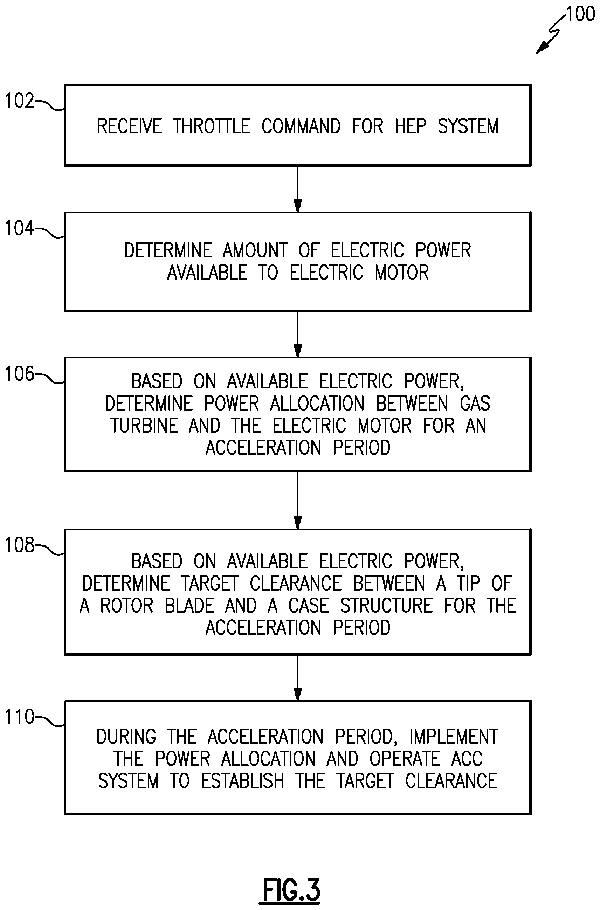

The ACC system 13 includes a source 40 of cooling fluid and a valve 42 that controls a flow of the cooling fluid to a case structure of the gas turbine engine 14. A controller 50 is shared between the HEP system 12 and ACC system, and may be the FADEC in one example. The controller 50 includes processing circuitry (e.g., one or more microprocessors) configured to implement the method of Figure 3 that is discussed below. Although depicted as a single unit, it is understood that the controller 50 may include distributed control functionality (e.g., one controller for the HEP system 12 and one controller for the ACC system 13). The cooling fluid may be air tapped from the low pressure compressor 28 or high pressure compressor 32, for example.

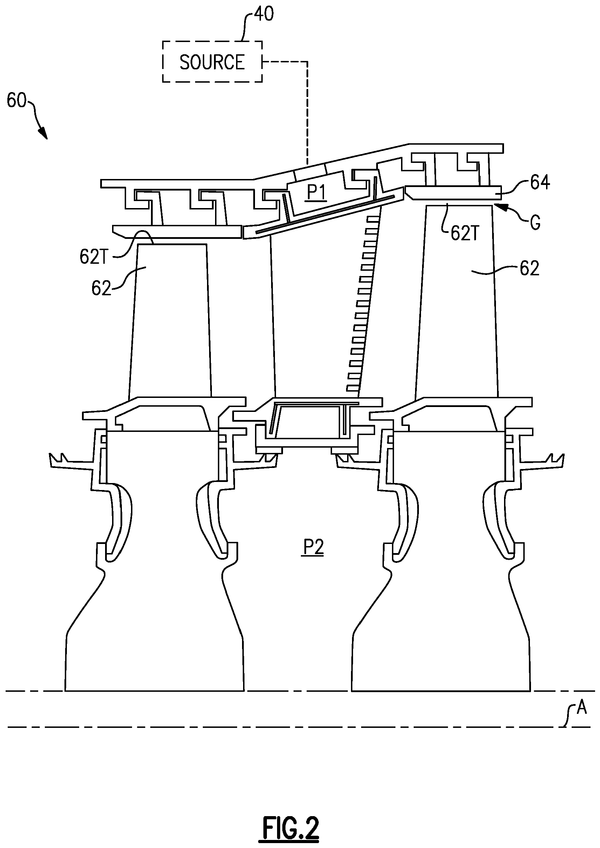

Figure 2 illustrates an example implementation of the ACC system 13 of Figure 1 that provides cooling augmentation for a section 60 of the gas turbine engine 14, such as the turbine section 35 of Figure 1. As shown in Figure 2, the section 60 includes rotor blades 62 (corresponding to two rotor stages) that rotate about the central longitudinal axis A, and are surrounded by a case structure 64 (e.g., a blade outer air seal). A vane 66 is disposed between the two rotor blades 62. The tip portions 62T of the blades 62 and the adjacent case structure 64 are arranged in close radial proximity to reduce the amount of gas flow that escapes around the tip portions 62T through a corresponding clearance gap G. The ACC system 13 of Figure 1 is configured to selectively deliver cooling air from source 40 to the section 60 to adjust the clearance gap G to a desired dimension during one or more operating conditions of the HEP system 12.

In the example of Figure 2, the ACC system 13 provides cooling augmentation to the rotor blades 62 (e.g., via plenums P1, P2 defined by a portion of an engine static structure of the HEP system 12, which may extend circumferentially around the central longitudinal axis A).

Figure 3 is a flowchart that schematically illustrates an example method 100 which may be performed by the controller 50. A throttle command is received for the HEP system 12 (step 102). The HEP system 12 includes gas turbine engine 14 and electric motor 16 which is configured to assist the gas turbine engine 14 by rotating a first shaft of the gas turbine engine 14 (e.g., low speed shaft 22 or high speed shaft 24).

A determination is made of an amount of electric power that is available to the electric motor 16 (step 104). Based on the amount of electric power available to the electric motor 16 determined in step 104, a power allocation is determined between the gas turbine engine 14 and the electric motor 16 for an acceleration period during which a rotational speed of the first shaft or a second shaft of the gas turbine engine 14 is accelerated to implement the throttle command (step 106). The power allocation indicates an amount of *P_{drv}* that should be provided by *P_{gt}* and an amount that should be provided by *Pₑₘ* during the acceleration period. One of the first shaft and second shaft is part of the low pressure spool of the gas turbine engine 14 and the other of the first shaft and the second shaft is part of the high pressure spool of the gas turbine engine 14.

Also based on the amount of electric power available to the electric motor 16, a target clearance is determined (step 108) between a tip of a rotor blade and a case structure for the acceleration period (e.g., corresponding to gap G in Figure 2 between rotor blade tip 62T and case structure 64). During the acceleration period, the power allocation of step 106 is implemented and the ACC system 13 is operated to establish the target clearance of step 108 (step 110).

In one or more embodiments, the target clearance prior to the acceleration is also determined based on the amount of available electric power, such that the target clearance decreases as battery power increases, which maintains headroom for the expansion of the components during the acceleration.

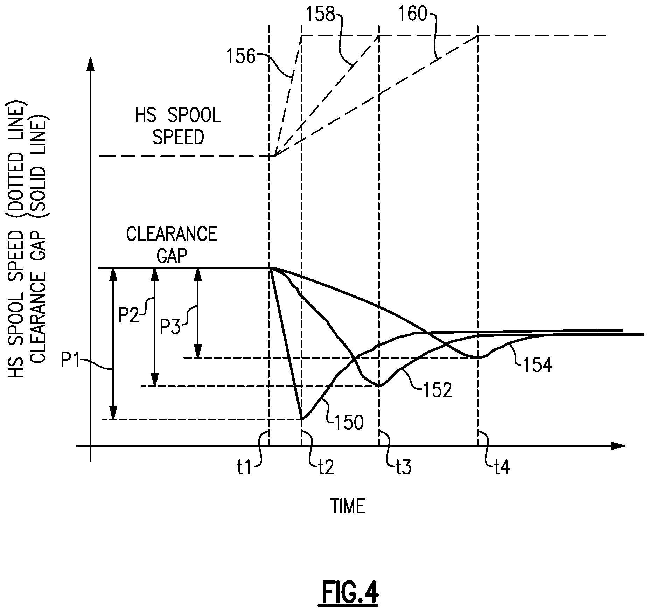

For a particular throttle command, as the amount of electric power available increases, the determining of step 106 increases how much of the power allocation is allocated to the electric motor 16, and the determining of step 108 also decreases the target clearance. Stated another way, for the given throttle command received when the HEP system 12 is providing a first amount of thrust: if the available electric power is lower (e.g., 50%) then a first lower target clearance and first value of *Pₑₘ* will be used, and if the available electric power is higher (e.g., 100%), then a second target clearance and a second value of *Pₑₘ* will be used, where the second target clearance is lower than the first target clearance, and the second value of *Pₑₘ* is higher than the first value of *Pₑₘ.* This will be discussed in greater detail in connection with Figures 4-5 below.

In one or more embodiments, the determining of the amount of electric power available to the electric motor 16 in step 104 is based partially or entirely on a charge level of the battery 18 that is configured to power the electric motor 16.

In one or more embodiments, at least electric motor 16B is a motor-generator operable to power the electric motor 16A when it has excess capacity, and the determining of the amount of electric power available to the electric motor 16A in step 104 is determined based on that amount of excess capacity (in addition or as an alternative to the battery-based determination of the previous paragraph). As used herein, "excess capacity" refers to a situation where the shaft 22 or 24 driven by the electric motor-generator 16B is determined to be able to transfer some of its power to the electric motor 16A (e.g., when the gas turbine engine 14 is approaching, but has not reached a limiting stall margin).

Figure 4 is a graph that schematically illustrates the clearance gap G and throttle conditions (y-axis) over time (x-axis) for various battery charge levels. Although Figure 4 only discusses available electric power from the battery 18, it is understood that available electric power from another motor-generator could be considered as well (as discussed above).

Lines 150, 152, and 154 represent the clearance gap G when the battery 18 has no charge (line 150), has a 50% charge (line 152), and has 100% charge (line 154). Similarly, lines 156, 158, and 160 represent an acceleration of the high speed shaft 24 when the battery 18 has no charge (line 156), has a 50% charge (line 158), and 100% charge (line 160). The example of Figure 4 refers to a configuration in which a single motor-generator 16 is provided which is configured to drive rotation of the low speed shaft 22.

At time *t1*, a throttle command is received. If the battery 18 has 0% charge, *Pₑₘ* is zero. In this scenario, the high speed shaft 24 accelerates at a first acceleration *Acc1* corresponding to line 156, which causes a large change in the clearance gap G (see line 150) corresponding to "pinch" *P1* which has an apex at time *t2.*

If the battery 18 has a 50% charge, *Pₑₘ* has a first non-zero value *X1.* In this scenario, the high speed shaft 24 accelerates at a second acceleration *Acc2* (where *Acc2* < *Acc1*) corresponding to line 158, which causes a smaller change in the clearance gap G (see line 152) corresponding to pinch *P2* which has an apex at time *t3* (where *P2 < P1*)*.*

If the battery 18 has a 100% charge, *Pₑₘ* has a second non-zero value *X2* (where *X2 > XI).* In this scenario, the high speed shaft 24 accelerates at a third acceleration *Acc3 (whereAcc3 <Acc2 <Accl)* corresponding to line 160, which causes a still smaller change in the clearance gap G (see line 154) corresponding to pinch *P3* which has an apex at time *t4* (where *P3 < P2 < P1*)*.*

As the share of *Pₑₘ* in a given power allocation increases relative to *P_{gt}*, a temperature of the HEP 12 increases more slowly, because less combustion is happening (as shown with the decreasing acceleration rates of lines 158, 160). This reduces the change in the clearance gap G (as represented by the pinch values *P1*, *P2,* and *P3*), which allows the HEP 12 to operate with a tighter clearance gap G. Historically, maintaining a small clearance gap has necessitated a drawn out thrust increase to avoid dramatic pinches such as pinch *P1*, but by increasing reliance on the electric power *Pₑₘ*, for a given thrust response rate a tighter gap can be maintained because the pinch magnitude becomes lower.

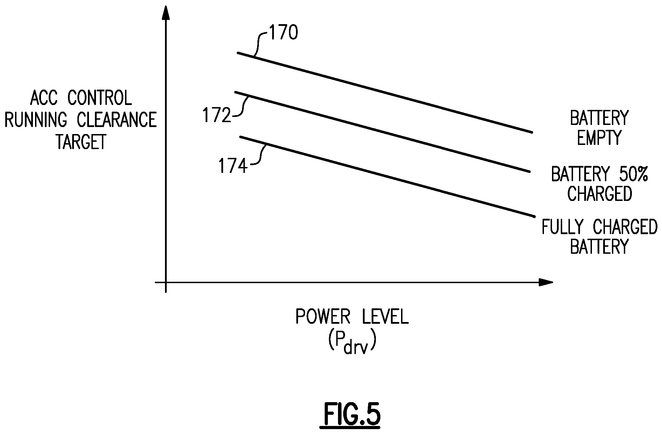

Figure 5 is a graph that schematically illustrates how power level (x-axis) varies based on an ACC system 13 running clearance target (y-axis). Here too, although only available electric power from the battery 18 is discussed, it is understood that available electric power from another motor-generator could be considered as well (as discussed above).

In particular, the x-axis represents the power level of the HEP 12 power (i.e., *P_{drv}*)*.* Line 170 represents a 0% charge of battery 18, line 172 represents a 50% charge of battery 18, and line 174 represents a fully charged battery 18. As shown in Figure 5, as the power level *P_{drv}* increases, the clearance target for the ACC system 13 decreases as well. A largest target clearance (line 170) is used for the empty battery 18 to accommodate the pinch *P1* of Figure 4. An intermediate target clearance (line 172) is used for the 50% charge of battery 18 to accommodate the pinch *P2* in Figure 4. A smallest target clearance (step 174) is used to accommodate the pinch *P3* of Figure 4. Figure 5 demonstrates how tighter (i.e., smaller) clearance targets can be utilized when a greater portion of the power allocation of share of *P_{drv}* is provided by the electric motor(s) 16.

Although example embodiments have been disclosed, a worker of ordinary skill in this art would recognize that certain modifications would come within the scope of this disclosure. For that reason, the following claims should be studied to determine the scope and content of this disclosure.

## Claims

1. A method for a hybrid electric propulsion system (12), comprising:
receiving a throttle command for a hybrid electric propulsion system (12), wherein the hybrid electric propulsion system (12) includes a gas turbine engine (14) and an electric motor (16) configured to assist the gas turbine engine (14) by rotating a first shaft (22, 24) of the gas turbine engine (14);
determining, based on an amount of electric power available to the electric motor (16):
a power allocation between the gas turbine engine (14) and the electric motor (16) for an acceleration period during which a rotational speed of the first shaft (22, 24) of the gas turbine engine (14) is accelerated to implement the throttle command, wherein the first shaft (22, 24) is part of a low pressure spool of the gas turbine engine (14) or a high pressure spool of the gas turbine engine (14); and
a target clearance between a tip (62T) of a rotor blade (62) and a case structure (64) for the acceleration period; and
during the acceleration period, implementing the power allocation and operating an active clearance control system to establish the target clearance.

2. The method of claim 1, wherein, for a particular throttle command, as the amount of electric power available increases, the target clearance decreases.

3. The method of claim 1 or 2, comprising determining the amount of electric power available to the electric motor (16) based on a charge level of a battery (18) configured to power the electric motor (16).

4. The method of any preceding claim, wherein:
the electric motor (16) is a first motor-generator (16A), and the hybrid electric propulsion system (12) includes a second motor-generator (16B) configured to drive rotation of a second shaft (22, 24); and
the method further comprises determining the amount of electric power available to the first motor-generator (16A) based on an amount of power available from the second motor-generator (16B) due to excess capacity of the second motor-generator (16B), optionally the method further comprising:
determining the amount of electric power available to the electric motor (16) based on a charge level of a battery (18) configured to power the first motor-generator (16A) or the second motor-generator (16B).

5. The method of any preceding claim, comprising:
implementing a first acceleration rate for the first shaft (22, 24), during the acceleration period for a first amount of the available electric power; and
implementing a second acceleration rate for the first shaft (22, 24) during the acceleration period for a second amount of the available electric power, wherein the first amount of the available electric power is greater than the second amount of the available electric power, and the first acceleration rate is less than the second acceleration rate.

6. A system for an aircraft, comprising:
an active clearance control system configured to control a clearance (G) between a tip (62T) of a rotating blade (62) and a case structure (64) by controlling thermal growth of the case structure (64);
a hybrid electric propulsion system (12) that includes a gas turbine engine (14) and an electric motor (16) configured to assist the gas turbine engine (14) by rotating a first shaft (22, 24) of the gas turbine engine (14); and
a controller (50) configured to:
receive a throttle command;
determine, based on an amount of electric power available to the electric motor (16):
a power allocation between the gas turbine engine (14) and the electric motor (16) for an acceleration period during which a rotational speed of the first shaft (22, 24) of the gas turbine engine (14) is accelerated to implement the throttle command, wherein the first shaft (22, 24) is part of a low pressure spool of the gas turbine engine (14) or a high pressure spool of the gas turbine engine (14); and
a target clearance between a tip (62T) of a rotor blade (62) and a case structure (64) for the acceleration period; and
during the acceleration period, implement the power allocation and operate the active clearance control system to establish the target clearance.

7. The system of claim 6, wherein the controller (50) is configured to, for a particular throttle command, as the amount of electric power available increases, decrease the target clearance.

8. The system of claim 6 or 7, comprising one or more batteries (18) configured to power the electric motor (16), wherein the controller (50) is configured to determine the amount of electric power available to the electric motor (16) based on a charge level of the one or more batteries (18).

9. The system of any of claims 6 to 8, wherein:
the electric motor (16) is a first motor-generator (16A), and the hybrid electric propulsion system (12) includes a second motor-generator (16B) configured to drive rotation of the second shaft (22, 24); and
the controller (50) is configured to determine the amount of electric power available to the first motor-generator (16A) based on an amount of power available from the second motor-generator (16B) due to excess capacity of the second motor-generator.

10. The system of claim 9, wherein the controller (50) is further configured to determine the amount of electric power available to the electric motor (16) based on a charge level of a battery (18) configured to power the first motor-generator (16A) or the second motor-generator (16B).

11. The system of any of claims 6 to 10 , wherein the controller (50) is configured to:
implement a first acceleration rate for the first shaft (22, 24) during the acceleration period for a first amount of the available electric power; and
implement a second acceleration rate for the first shaft (22, 24) during the acceleration period for a second amount of the available electric power;
wherein the first amount of available electric power is greater than the second amount of electric power, and the first acceleration rate is less than the second acceleration rate.

12. The method or system of any preceding claim, wherein the rotor blade (62) is a blade of a high pressure turbine (34), and the first shaft (22, 24) is part of the high pressure spool or the low pressure spool.

13. The method or system of any preceding claim, wherein:
the rotor blade (62) is a blade of a low pressure turbine (30) of the gas turbine engine (14), and/or
the first shaft (22, 24) is part of the low pressure spool.

14. A method for a hybrid electric propulsion system (12), comprising:
receiving a throttle command for a hybrid electric propulsion system (12), the hybrid electric propulsion system (12) including a gas turbine engine (14) and an electric motor (16) configured to assist the gas turbine engine (14) by rotating a first shaft (22, 24) of the gas turbine engine (14);
based on the throttle command and an amount of electric power available to the electric motor (16), determining a target clearance between a tip (62T) of a rotor blade (62) and a case structure (64); and
implementing the power allocation and operating an active clearance control system to establish the target clearance.

15. The method of claim 14, wherein:
the electric motor (16) is a first motor-generator (16A), and the hybrid electric propulsion system (12) includes a second motor-generator (16B) configured to drive rotation of a second shaft (22, 24); and
the method further comprises determining the amount of electric power available to the first motor-generator (16A) based on an amount of power available from the second motor-generator (16B) due to excess capacity of the second motor-generator.
